(19) Europäisches Patentamt
European Patent Office
Office européen des brevets

(11) EP 2 779 547 A1

(12) **EUROPEAN PATENT APPLICATION**

(43) Date of publication:
17.09.2014 Bulletin 2014/38

(51) Int Cl.:
H04L 25/02 (2006.01)　　　H04L 25/03 (2006.01)

(21) Application number: 13305293.6

(22) Date of filing: 14.03.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: ST-Ericsson SA
1228 Plan-les-Ouates (CH)

(72) Inventors:
• Ancora, Andrea
06300 Nice (FR)
• Tomatis, Fabrizio
06700 Saint Laurent du Var (FR)
• Scherb, Ansgar
91207 Laud an der Pegnitz (DE)

(74) Representative: Hirsch & Associés
58, avenue Marceau
75008 Paris (FR)

(54) **Iterative successive interference cancellation in MU-MIMO using interference whitening and channel reestimation**

(57)　It is provided a method implemented by a receiver of a telecommunication device comprising receiving (S10) a signal ($y$) corresponding to an intended signal ($u$) sent turbo-encoded and bits-to-symbols converted ($s$) on a MIMO time-dispersive channel having a dispersion matrix ($H$), applying an interference-cleaning process (S30) on the initial signal ($\hat{s}_{LIN}$) comprising a spatial interference whitening (S310), a MIMO joint detection (S320), and then a turbo-decoding (S330), subtracting (S50) from the initial signal ($\hat{s}_{LIN}$) a subtraction signal ($\dot{H}_{Isl}\hat{s}$) determined by performing an interference-extracting process (S40) on the result of the application of the interference-cleaning process (S30), determining an estimated signal ($\hat{u}$) indicative of the intended signal ($u$) by performing the interference-cleaning process (S30) on the result of the subtracting (S50).

The method improves the field of MIMO.

FIG. 2

EP 2 779 547 A1

## Description

TECHNICAL FIELD

The invention relates to the field of electronics, and more particularly to a method implemented by a receiver of a telecommunication device for receiving a signal sent on a multiple-input multiple-output (MIMO) time-dispersive channel.

BACKGROUND

Mobile telecommunication involves a cellular network with telecommunication devices communicating together via a receiver and an emitter embedded within the devices. These telecommunication devices include base stations (called Node B in the case of Universal Mobile Telecommunications System - UMTS - networks based on Wideband Code Division Multiple Access - WCDMA - technology) that relay communications, and end devices (User Equipment - UE) including mobile communication devices such as mobile phones or laptop/tablet computers that may communicate with each other or with servers via communication with a base station of the cellular network. Communication based on WCDMA protocols has been improved thanks to the use of High Speed Packet Access (HSPA) protocols. Notably, in HSPA High Speed Downlink Packet Access (HSDPA) designates standards widely known to increase performance, by allowing higher data transfer speeds and capacity. In particular, HSDPA defines MIMO communication, which implies the use of multiple antennas, e.g. at both the transmitter and receiver, to improve communication performance.
The above is widely discussed in 3rd Generation Partnership Project (3GPP) standard technical documents, such as:

- "Physical channels and Mapping of transport channels onto physical channels (FDD)", TS 25.211;
- "Multiplexing and channel coding (FDD)", TS 25.212;
- "Spreading and modulation (FDD)", TS 25.213;
- "Physical layer procedures (FDD)", TS 25.214; and
- "Physical layer; Measurements (FDD)", TS 25.215.

Beyond these standardization documents, the literature on this subject also comprises in a great extent general discussions on both MIMO communication and adequate receiver implementations:

- 3G Americas white paper "Mobile Broadband: The Global Evolution of UMTS/HSPA", "3GPP Release 7 and Beyond", July 2006, which discusses MIMO and HSDPA on pp. 15-19;
- Ericsson white paper, "WCDMA Evolved", "The first step - HSDPA", May 2004, Overview of HSDPA specifics, benefits for operators and end-users;
- J. Korhonen (TTPcom), "HSDPA An Introduction", which is a basic introduction to HSDPA;
- S. Kim, H. Kim, K.B. Lee (Samsung), "HSDPA in Gaussian MIMO Broadcast Channels", CIC 2004, which compares TDMA-MIMO with SDMA and discusses various proposals in the MIMO standardization process (such as PARX and D-TxAA);
- T. Baumgartner, E. Bonek (Mobilkom Austria), "On the Optimum Number of Beams for Fixed Beam Smart Antennas in UMTS FDD", IEEE-WC Jan. 2006;
- C. Mehlfuhrer, C.F. Mecklenbrauker, M. Rupp (TU Vienna), "On Reduced-Complexity Variants to the Double Space-Time Transmit Diversity Proposal for UMTS", IEEE ISCCSP, March 2006, which concerns double STTD proposals, for $4 \times 2$ systems;
- D. Samardzija, A. Lozano, C.B. Papadias (Lucent), "Design and Experimental Validation of MIMO Multiuser Detection for Downlink Packet Data", EURASIP JASP, Nov. 2005, which discusses MUD techniques to handle interference between non-orthogonal beams for SDMA;
- K.-D. Kammeyer (Univ. of Bremen), "Transmit Diversity and MIMO Systems for the UMTS Downlink (FDD)";
- UMTSWorld, "HSDPA in W-CDMA", which provides a comparison of essential parameters of HSDPA and 1xEV-DV;
- J.G. Andrews, W. Choi, R.W. Heath Jr., "MIMO in 3G Cellular Systems: Challenges and Future Directions", submitted at IEEE COM Mag. in 2005, and which discusses multi-cell MIMO approaches, intercell interference issues;
- J.H. Horng, L. Li, J. Zhang (Mitsubishi), "Adaptive Space-Time Transmit Diversity for MIMO Systems", 57th IEEE Vehicular Technology Conf., VTC-Spring 2003;
- M.J. Heikkila, K. Majonen (Nokia), "Comparison of Layered and Diversity Approaches for Increasing WCDMA Data Rates in Frequency-Selective MIMO Channels", IEEE 7th Int'1 Symp. on Spread Spectrum Techniques and Applications (ISSTA), 2-5 Sept. 2002; and
- J. Zhang, B. Raghothaman, Y. Wang, G. Mandyam (Nokia), "Receivers and CQI Measures for MIMO-CDMA Systems in Frequency-Selective Channels", Eurasip JASP, pp. 1668-1679, Nov. 2006.

The use of MIMO leads to a specific time-dispersion of the signals. In other words, a signal sent on a channel undergoes, among other types of interference, a time-dispersion or temporal interference. Solutions to correct this time-dispersion exist. However, room for improvement remains.

## SUMMARY

The invention aims at improving the field of MIMO mobile telecommunications.

This object is achieved with a method implemented by a receiver of a telecommunication device. The method comprises receiving a signal corresponding to an intended signal sent turbo-encoded and bits-to-symbols converted on a MIMO time-dispersive channel having a dispersion matrix. The method also comprises deriving an initial signal from the received signal. The method also comprises applying an interference-cleaning process on the initial signal. The interference cleaning process comprises a spatial interference whitening based on an estimation of the dispersion matrix. The interference cleaning process further comprises a MIMO joint detection based on the spatial interference whitening and on the estimation of the dispersion matrix. The interference cleaning process then comprises a turbo-decoding. The method also comprises subtracting from the initial signal a subtraction signal determined by performing an interference-extracting process on the result of the application of the interference-cleaning process. The interference-extracting process comprises a bits-to-symbols conversion (S410). The interference-extracting process then comprises an inter-symbol interference extraction based on the estimation of the dispersion matrix. The method also comprises determining an estimated signal indicative of the intended signal by performing the interference-cleaning process on the result of the subtracting.

This object is also achieved with a circuit adapted to configure a receiver of a telecommunication device to perform the method.

This object is also achieved with a receiver of a telecommunication device configured to perform the method.

This object is also achieved with a mobile communication device comprising the receiver.

This object is also achieved with a program comprising instructions for configuring a receiver of a telecommunication device to perform the method.

This object is also achieved with a data storage medium having recorded thereon the program.

The invention offers many advantages, including the following:

- Because the method is implemented by a receiver of a telecommunication device, the method is for receiving signals in a telecommunication process. Notably, the method comprises the reception of signals sent turbo-encoded and bits-to-symbols converted on a MIMO time-dispersive channel, which means that the receiver is adapted to correctly receive and interpret signals of such format that are sent with this specific type of telecommunication.
- Because the method applies an interference-cleaning process comprising a spatial interference whitening, a MIMO joint detection based on the spatial interference whitening, and then a turbo-decoding, the method takes advantage of the MIMO nature and of the turbo-encoded nature of the signal to clean it from interference.
- Because the spatial interference whitening is based on an estimation of the dispersion matrix and the MIMO joint detection is based on the estimation of the dispersion matrix, the interference-cleaning process efficiently cleans the signal from time-dispersion interference.

- Because the method performs the interference-cleaning process (at least) twice, the second time on an already cleaned version of the initial signal (derived from the received signal), the method adopts a Serial Interference Cancellation (SIC) approach that increases the efficiency of the interference cleaning, with a relatively low increase in computational costs.
- The combination, in the specific order of the method, of the use of the SIC approach with the use of MIMO joint detection and turbo-decoding increases efficiency of the cleaning to a surprising extent, compared to the efficiency of the cleaning using each of these approaches alone.

Further features and advantages of the invention will appear from the following description of embodiments of the invention, given as non-limiting examples, with reference to the accompanying drawings listed hereunder.

## BRIEF DESCRIPTION OF THE DRAWINGS

FIG. 1 shows a schematic representation of an example of a mobile communication device comprising the receiver,

FIG. 2 shows on a flowchart an example of the method, and
FIG. 3 shows a model of the derivation of the detector from the received signal.

## DETAILED DESCRIPTION

The receiver may be included in any type of electronic device. Notably, a device suitable for comprising the receiver may comprise hardware memory, including volatile and/or non-volatile memory. The memory may be accessible by at least one processor, e.g. a Central Processing Unit (CPU) of the device. In an example, the device may further comprise audio convertors and transducers, such as digital to analog convertor (DAC) and a loudspeaker. In such a case, the device is adapted to play a numeric audio signal. The device may further comprise a graphical user interface, such as a sensitive screen or a screen and keyboard.

The device may be a communication device. The device may thus comprise a signal emitter and a signal receiver, the latter consisting of or comprising the discussed receiver. For example, the device may be a telephone. The device may be a wireless communication device. The system may be mobile (i.e. transportable). The device may for example be a mobile phone (e.g. a cell phone). Thus, the device is very convenient as it combines the advantages of allowing phone calls and performing other electronic actions, including uses of the electronic device.

The receiver is configured to perform the method. In other words, the receiver may, as such, without further installation of hardware and/or software, perform the method, provided that an adequate signal (one that corresponds to an intended signal sent turbo-encoded and bits-to-symbols converted on a MIMO time-dispersive channel having a dispersion matrix) is sent to be received by the receiver, thereby performing the first step of the method. This means that the receiver may comprise one or more antennas, preferably more than one as the signal to be received is MIMO and may thus be actually multiple on the output end. The remaining steps of the method may possibly be performed automatically, or semi-automatically (e.g. with a prior manual setting of the receiver or of a device including the receiver), in any way known to the skilled person.

For example, the receiver may include or be connected to a circuit adapted to configure the receiver to perform the method. The circuit is a piece of hardware and may comprise at least one microchip, for example one microchip performing all steps of the method or several microchips dedicated to one or several (but not all) steps of the method and connected together.

Alternatively, the receiver may be any prior art receiver having hardware suitable for performing the method, such as antenna(s), processor(s), memory(ies) and/or microchip(s), but not configured for that. Such a receiver may be configured for performing the method by the installation of a (computer) program. In such a case, the program comprises instructions for configuring a receiver of a telecommunication device to perform the method. These instructions may be in any language known to the skilled person, for example any programming language, e;g. an object-oriented language, or a compiled or pre-compiled language. The instructions may be the code lines as defined after installation on the receiver, or code lines for driving the installation by any processor of the receiver, as known to the skilled person. The program may be recorded on any suitable data storage medium, such as a memory chip, a DVD, a hard disk, flash memory, or any hardware of the like.

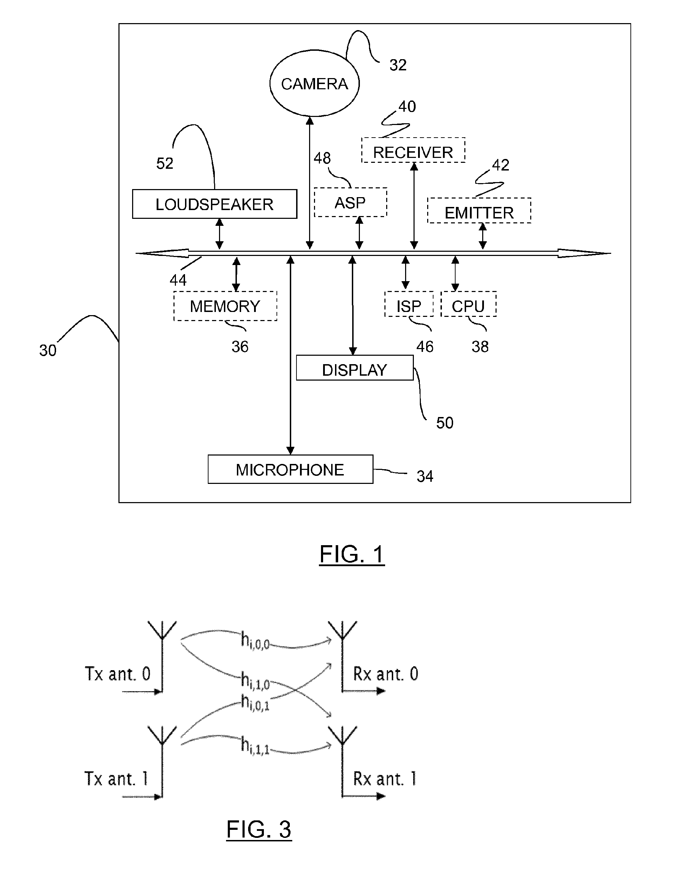

It is referred to FIG. 1 which shows a block diagram representing an example of a mobile electronic device 30, which may be a mobile phone, comprising receiver 40 configured for performing the method.

In the example, device 30 may also be used for capturing audio and image data. For this, device 30 comprises camera 32 and microphone 34 for respectively capturing image and audio data. Device 30 also comprises memory 36 which may comprise volatile and non-volatile memory. Memory 36 may be divided in several compartments, possibly physically apart in system 30. Device 30 also comprises processors including CPU 38, Image Signal Processor 46 (ISP) and Audio Signal Processor 48 (ASP). These processors access data through bus 44, process the data and circulate the data through the bus 44. Of course, fewer than three processors may physically be embodied, e.g. if one processor accomplishes all computations. On the other hand, more than three processors may physically be embodied, e.g. in the case of parallel processing. Device 30 also comprises display 50 and loudspeaker 52 for outputting data, i.e. for respectively displaying image data and playing audio data. Device 30 also comprises receiver 40 and emitter 42, which are for communicating with the exterior e.g. with other systems, e.g. if system 30 is a cellular phone.

Device 30 receives signals via receiver 40. When these signals comprise a MIMO signal corresponding to an intended signal sent turbo-encoded and bits-to-symbols converted (on a MIMO time-dispersive channel having a dispersion matrix), device 30 may perform the method, e.g. directly and fully by receiver 40. Once processed by the method, the received signal is efficiently cleaned (at least partly) from its temporal interference (i.e. time dispersion), and may thus be processed in a more adequate way by device 30 (the signal may for example be played by loudspeaker 52, displayed by display 50, or lead to a response emission by emitter 42, involving corresponding processor(s) CPU 38, ISP 46 and/or ASP 48).

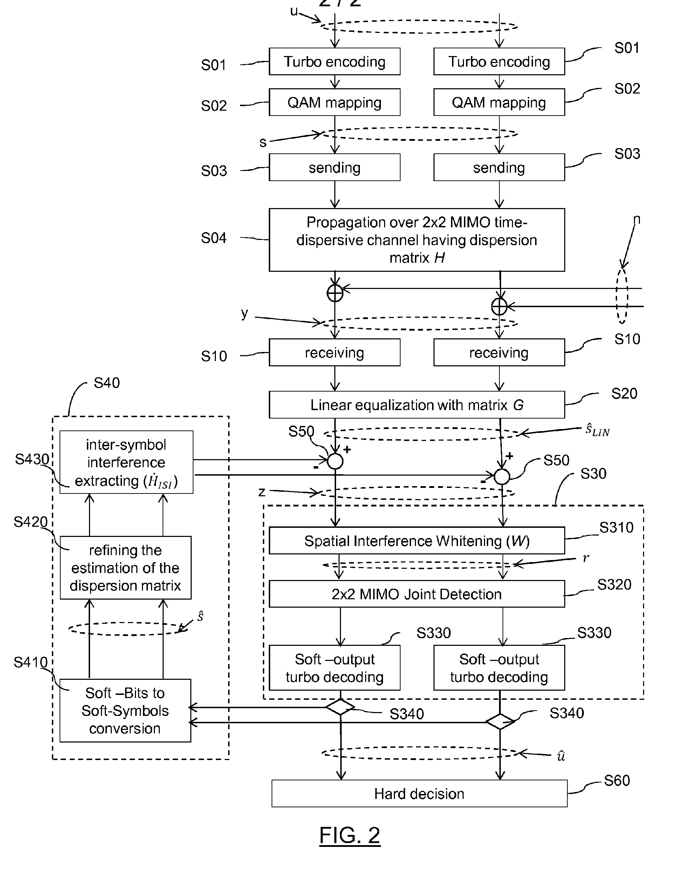

It is now referred to FIG. 2 which shows on a flowchart an example of the method, more precisely indicating the whole processing of a bits signal $u$ submitted to an example of a transmission compliant with the method and then a reception according to an example of the method. In that sense, FIG. 2 may correspond to a functional block diagram of an example of a transmitter (before propagation S04) and to a functional block diagram of an example of a receiver (after propagation S04). Matrices or equivalents ($H$, $G$, $W$, $\dot{H}_{ISI}$) applied to the signal at each step are indicated within each block of the flowchart where applicable. The method (i.e. steps after propagation S04) may be performed by the receiver, for example such as receiver 40 of FIG. 1. The receiver of the example may comprise at least two antenna(s) for the receiving step, and/or units comprising dedicated hardware and/or software for performing functions of the different blocks of the flowchart.

FIG. 2 shows the transmission of an intended signal $u$ expressed in bits. $u$ is the signal intended to be sent in the communication process illustrated on FIG. 2. As widely known, $u$ is not sent as such, but $u$ is sent at S03 after being turbo-encoded S01 and then bits-to-symbols converted S02. Turbo-encoding S01 $u$ may be performed according to any method known to the skilled person, e.g. according to any relevant standard used for the network, as long as the method used is also known to the receiver. Here, turbo-encoding S01 comprises the introduction of redundancy in intended signal $u$. This allows the increase of the probability that intended signal $u$ will be correctly detected/decoded on the receiver end. Bits-to-symbols conversion S02 may also be performed according to any method known to the skilled person, e.g. according to any relevant standard used for the network, as long as the method used is also known to the receiver. In the example, intended (bits) signal $u$ is converted (after turbo-encoding S01) to intended (symbols) signal $s$ via a Quadrature Amplitude Modulation (QAM) mapping S02. Then signal $s$ is sent S03 on the communication channel, over which it propagates S04. However, these processing operations S01-S04 are all invisible to the receiver, which, in the method, only receives at S 10 a signal y, that corresponds (via its structure/its format) to said operations, but without the receiver having "observed" (or "been aware of') said operations, since these operations take place at the transmitter side (for S01-S03) or over the channel (for S04).

In the example, signals $u$ and s are composed of two separate signals (corresponding to the two represented parallel branches) for the sending S03, and signal $y$ is received at S10 and then processed at S20-S60 under a format composed of two separate signals (corresponding to the two represented parallel branches). This is to illustrate the fact that the communication occurring in this example is a MIMO communication, in particular a 2x2 MIMO communication. For example, intended signal $u$ may be an HSPA 2x2 MIMO signal, and thereby implement the relevant standards. In other words, signal $s$ is composed of two signals (resulting from a previous decomposition of signal $u$) each emitted by a respective antenna of the transmitter, after the addition of weights, the application of spreading and scrambling processes, and the appending of pilot signals (all these operations being known to the skilled person and defined in WCDMA's standards for HSPA, in particular HSDPA). This decomposed signal is received by the receiver via two antennas of the receiver, which recognize the pilot signals and perform adequate de-spreading and descrambling operations (as also known to the skilled person and defined in WCDMA's standards). It is noted that FIG. 2 does not represent these operations that are specific to MIMO communication for the purpose of simplicity. Also, considerations about how to implement difference steps of the method or functions of the receiver relative to the fact that the signal is MIMO are left to the skilled person. This should however not be construed as a loss of generality.

MIMO communication is an advanced antenna technique that improves the spectral efficiency and thereby boosts the overall system capacity. MIMO implies that the base station and/or the mobile communication device employ multiple antennas. MIMO techniques are now widely studied and applied in practice for downlink communications, i.e. from the base station to the mobile terminal. A variety of MIMO techniques or modes exist, such as Per Antenna Rate Control (PARC), selective PARC (S-PARC), transmit diversity, receiver diversity, Double Transmit Antenna Array (D-TxAA). D-TxAA is an advanced version of transmit diversity, which is already used in WCDMA standards. Irrespective of the MIMO technique, the notation ($K$ x $L$) may generally be used to represent MIMO configuration in terms number of transmit ($K$) and receive antennas ($L$). The common MIMO configurations used or currently discussed for various technologies are: (2 x 1), (1 x 2), (2 x 2), (4 x 2), (8 x 2) and (8 x 4). The configurations represented by (2 x 1) and (1 x 2) are special cases of MIMO and they correspond to transmit diversity and receiver diversity respectively. Configuration (2 x 2) of the example of FIG. 2 is used in WCDMA, notably release 7. In particular, WCDMA FDD release 7 supports double transmit antenna array (D-TxAA) in the downlink. The E-UTRAN downlink indeed supports several MIMO schemes including MIMO techniques including SU-MIMO and MU-MIMO. The MIMO technology has also been widely adopted in other wireless communication standards, e.g. IEEE802.16. As known, the above-mentioned MIMO modes or other MIMO techniques enable spatial processing of the transmitted and received signals. This ability of spatial diversity generally improves spectral efficiency, extends cell coverage, enhances user data rate, or mitigates multi-user interference. In essence each MIMO technique has its own benefit. For instance the receiver diversity (1 x 2) particularly improves the coverage. On the other hand (2 x 2) MIMO such as D-TxAA would lead to increase peak user bit rate. In general a 2x2 MIMO scheme may double the data rate. The possibility to double the data rate depends on whether the channel is sufficiently uncorrelated so that the rank of the 2x2 MIMO channel matrix is 2 (the rank is the number of independent row or columns of the matrix). In general the average data rate is lower than twice the data rate achieved in single link conditions.

Thus, the use of an HSPA 2x2 MIMO channel to propagate S04 signal $s$ that is a turbo-encoded and bits-to-symbols converted version of intended signal $u$ (i.e. the use of HSPA 2x2 MIMO communication protocols) drastically increases data transfer rate. However, as for all channels, such a channel (i.e. such a type of communications) presents time-dispersion issues. In other words, signal $s$ may be subjected to so-called "time-dispersion", also referred to as temporal interference or echo. Yet in other words, although signal $s$ is intended to be sent (to be later decoded in order to retrieve $u$), a different signal $y$ is instead received, the difference being notably due to time-dispersion of the propagation channel. This time-dispersion is captured via dispersion matrix $H$. Matrix $H$ has a great size, meaning that it is not simply invertible, and that a finer type of data-processing must occur to simulate inversion. Thus, signal $s$ is not easily retrievable.

This is explained with the following developments. Within these developments, on top of matrix/vector notation to avoid the use of sums, it is chosen to organize samples in the antenna and time indexes space, as detailed below.

The symbol-level signal received at S10 may be modeled as:

$$y = Hs + n$$

With:

- $y$, the received signal samples vector (e.g. put out by the Analog to Digital Conversion -ADC- Radio Frequency -RF- layer of the receiver);
- $H$, the channel convolution matrix (i.e. dispersion matrix); and
- $n$, the (unknown) additive noise samples vector, not necessarily white (i.e. $n \sim N(0,Q)$).

It is noted that the method may be executed based on a pre-determined (i.e. preestablished) estimation of $H$, coming from the knowledge of the channel. How this first estimation of $H$ is established is known to the skilled person and is not the purpose of the present discussion. It should only be noted that this estimation may be an approximation of $H$ or it may even be equal to $H$ (in which latter case the refinement S420 of the example later discussed is not necessary). In any case, in the following, $H$ indistinctively designates the dispersion matrix or its estimation, bearing in mind that any processing performed by the receiver is necessarily performed based on the estimation (the exact dispersion matrix being by essence possibly unknown).

It is also noted that noise $n$ is added to the signal before reception S 10 as a disturbance, as known *per se.* Such noise is perfectly unknown, and it is not considered in the present discussion how to diminish the error introduced by such noise. In other words, the method does not handle the diminution of such noise, although it could be combined with a method having such purpose.

The received signal $y$ may be organized in the following way. The receiver may implement any known data-processing that corresponds to the following mathematical notations. The receiver may first stack samples from receiving antennas (first index). Then, the receiver may stack multiple-antennas samples vectors with increasing time index (second index).

This leads to the following notation:

$$\mathbf{y} = \begin{bmatrix} y_{0,0} \\ y_{1,0} \\ y_{0,1} \\ y_{1,1} \\ \vdots \\ y_{0,M-1} \\ y_{1,M-1} \end{bmatrix}$$

The transmitted QAM symbols sequence may be organized similarly (but where the first index represents the spatial stream):

$$s = \begin{bmatrix} s_{0,0} \\ s_{1,0} \\ s_{0,1} \\ s_{1,1} \\ \vdots \\ s_{0,N-1} \\ s_{1,N-1} \end{bmatrix}$$

Thus, the time-dispersive 2x2 MIMO channel may take a Block-Toeplitz convolution matrix structure:

$$H = \begin{bmatrix} H_0 & 0 & 0 & \cdots & 0 \\ H_1 & H_0 & 0 & \cdots & 0 \\ H_2 & H_1 & H_0 & \cdots & 0 \\ \vdots & \vdots & \vdots & \ddots & \vdots \\ H_{L-1} & H_{L-2} & H_{L-3} & \cdots & H_0 \end{bmatrix}$$

With $L$ being the delay-spread of the channel, $N$ the number of antennas sending the signal and $M=N+L-1$. Matrix $H$ thus has size $2M$ x $2N$.

It is noted that the channel structure is not exploited by this example of the method. The only aim is to pair spatial streams at I/O in the present discussion.

Each sub-block $H_i$ contains the 2x2 MIMO scalar channel taps (complex numbers, for distinguishing amplitude and phase) at delay $i$ (i.e. narrow-band channel):

$$H_i = \begin{bmatrix} h_{i,0,0} & h_{i,0,1} \\ h_{i,1,0} & h_{i,1,1} \end{bmatrix}$$

Where, finally, each sub-block corresponds to the spatial channel arising from transmitter $Tx$ and receiver $Rx$ antennas wireless link at a given time delay, as illustrated on FIG. 3.

The method comprises deriving an initial signal from the received signal $y$. The initial signal is any signal representing a prepared version of received signal $y$, appropriate as a starting point for the later processing steps of the method (i.e. the interference cleaning). The initial signal may be the signal $y$ itself. In the example of FIG. 2, the initial signal $\hat{s}_{LIN}$ is derived at S20 by performing a linear equalization $G$ on the received signal $y$. The linear equalization is performed according to the current estimation of the dispersion matrix $H$, as known to the skilled person. This allows a first cleaning of the signal from time-dispersion interference and thus reduces complexity of the whole process.

Indeed, as known *per se,* the received signal $y$ across antennas and delays may indeed be filtered by a linear equalizer $G$, which may be determined by the skilled person based on the knowledge of (an estimation of) $H$. The equalizer may take any form known to the skilled person and defined in the standards relevant to this example, possibly chosen to comply with a particular mode or scenario. The linear equalization may for example be a (e.g. parametric) Minimum Mean Squared Error (MMSE) of the form $G=(H^H H+Q)^{-1}H^H$, a Whitening Matched Filter (WMF) of the form $G=Q^{-1}H^H$, or any other equalization with any possible cost function upon which the equalizer is computed for. The linear front-end can be based on either (fractionally-sampled) chip-level or G-rake architectures.

The linearly decoded symbol estimates (i.e. derived signal) can then be written as:

$$\hat{s}_{LIN} = Gy = GHs + Gn$$

Now consider the 2x2$N$ Selection matrix $S_i$ to extract only the spatial pair $s_i$ at time index $i$ among the $N$ available,

or:

$$\mathbf{S_i} = \begin{bmatrix} 0 & 0 & \cdots & 1 & 0 & \cdots & 0 & 0 \\ 0 & 0 & \cdots & \underbrace{0 \quad 1}_{\text{Spatial pair } i} & \cdots & 0 & 0 \end{bmatrix}$$

Then, the *i*-th pair can be extracted from expression above by:

$$\hat{\mathbf{s}}_{\mathrm{LIN_i}} = \mathbf{S_i Gy} = \mathbf{S_i GHs} + \mathbf{S_i Gn}$$

The method is for decoding $\hat{s}_{LIN_i}$ based on received signal *y*. *i* is any time index (different from the last one) belonging to the set of time indices used by signal *s* corresponding to received signal *y*. An efficient value for the computations is to take a fixed time index *i = N/2* (e.g. floor). In other words, the method decodes the signal for a given time index or delay *i* based on a received signal of a certain size (or "window") "around" that given delay. The window used to decode the signal for one time index may be fixed, such that the time index *i* decoded at a given may for example correspond to the middle of such window. The method is then iterated for all time indices *i*, the "window" (i.e. the considered received signal *y*) being thereby moved or updated accordingly. Considerations on the implementation related to such iterations and the handling of the boundary indices are out of the present discussion. The method then comprises a first application of interference-cleaning process S30, on initial signal $\hat{s}_{LIN}$ (at first nothing comes from the subtraction sign '-' of subtraction operator S50 that stands upstream to the interference-cleaning process S30). The terms "applications" or "applying" with reference to the term "process" only mean that the process S30 is performed on an input signal, that is here initial signal $\hat{s}_{LIN}$. Interference-cleaning process S30 is a signal-processing process that cleans (at least partly) the input signal from interferences, including or consisting of temporal interferences due to time-dispersion.

The exact content of interference-cleaning process S30 is discussed later. Indeed, the Serial Interference Cancellation (SIC) approach mentioned earlier is now explained for understanding the global idea of the method.

The result of the first application (i.e. the application on the initial signal $\hat{s}_{LIN}$) of the interference-cleaning process S30 may be used to determine S40 a so-called subtraction signal $\dot{H}_{ISI}\hat{s}$ by performing S40 an interference-extracting process S40 on said result. The interference-extracting process S40, sometimes called "backward filter", is a process that determines (or "extracts") from a given signal the temporal interference that would be introduced to said given signal if said given signal were sent on the channel having dispersion matrix *H*. The idea is here to consider that the signal coming out of interference-cleaning process S30 is closer to the intended signal (modulo the alternative of using symbols or bits, and modulo the choice to have soft results instead of hard results, as discussed later) than the initial signal. Then, the idea is to determine the temporal interference from the signal coming out of interference-cleaning process S30 based on the knowledge possessed on the channel (this is possible although *H* is not invertible, as explained later and as known to the skilled person), so that such temporal interference may be subtracted from the initial signal. Indeed, the method comprises subtracting S50 from the initial signal $\hat{s}_{LIN}$ the subtraction signal $\dot{H}_{ISI}\hat{s}$. In other words, a new signal equal to $\hat{s}_{LIN}$ - $\dot{H}_{ISI}\hat{s}$ is computed (but any or both of $\hat{s}_{LIN}$ and/or $\dot{H}_{ISI}\hat{s}$ may be stored in parallel to performing the subtraction S50, in particular $\hat{s}_{LIN}$ that may be needed in case of other iterations, as mentioned later).

Interference-extracting process S40 comprises a bits-to-symbols conversion S410, according to any method known to the skilled person and defined in the standards relevant to the present example of the method (HSPA). This is because the output of interference-cleaning process S30 is under the bits format, as it ends by turbo decoding S330 (as discussed later). As the idea of the SIC approach is to "loop back" in the cleaning process, the signal has to be set back to the symbol format, namely, the QAM symbols. The main part of interference-extracting process S40 is however inter-symbol interference (ISI) extracting S430, that is based on the estimation of the dispersion matrix *H*. As known to the skilled person, if an estimation of the dispersion matrix *H* is available, it is also possible to estimate inter-symbol interference occurring for any given signal sent on the channel. For example, the inter-symbol interference extraction S430 may consist of applying the inter-symbol interference term $\dot{H}_{ISI}$ of the product $GH = \dot{H}_{OWN} + \dot{H}_{ISI}$ between the linear equalization and the estimation of the dispersion matrix. This interference term $\dot{H}_{ISI}$ is discussed further below.

Then, the method may determine an estimated signal *û* indicative of the intended signal *u* by performing the interference-cleaning process S30 on the result of the subtracting S50. Estimated signal *û* is indicative of the intended signal *u* in the sense that it is a guess of *u* from what has been received (i.e. signal *y*). Performing the interference cleaning process S30 a second time, on $\hat{s}_{LIN}$ - $\dot{H}_{ISI}\hat{s}$, instead of settling with the first application of the interference cleaning process S30, on $\hat{s}_{LIN}$, makes the final output result *û* closer to intended signal *u*, with relatively low processing costs.

Actually, the method may comprise iterating (i.e. repeating) the application of the interference-cleaning process S30, the subtracting S50 and the determining of *û* until convergence. The method may for example detect S340 such convergence, e.g. by testing S340 at a given iteration (e.g. but not the first one) if the output result *û* is the same as in the previous iteration. The application of the interference-cleaning process S30 is at each iteration performed on the result of the subtraction S50 of the previous iteration. This way, the estimated signal *û* is each time refined until convergence, leading at relatively low processing costs to a precise estimation of *u*. It is here noted that cases where there is no convergence may be handled in any way by the skilled person (e.g. the iteration may be stopped after a predetermined maximal number of iterations). An implementation of this example of method was tested and led to satisfying results (i.e. convergence was achieved in many cases and led to an estimated signal *û* close to the intended signal *u,* which was of course known in the testing procedure).

For the purpose of clarity, it is here noted that in the method of example, the turbo-decoding S330 outputs a soft result. This means that *û* is not provided as one hard signal, but actually in a soft manner, e.g. as a set of at least one signal with a probability attached to it (i.e. the probability that the signal was that one estimation). In such a case, the method may further comprise a hard-decision S60 based on the estimated signal *û,* after all the iterations mentioned above. This allows a finer final estimation. This type of result (i.e. soft) and the hard-decision are known to the skilled person. For example, the most probable result may be selected. However, when then iterating the interference-cleaning process S30 after the interference-extracting process S40 and the subtraction S50, the signal may actually be seen as the several possible signals as there are provided in the soft-result. The result of the next interference-cleaning process S30 may then again be soft. Such considerations are not the purpose of the present discussion and are matters of implementation known to the skilled person.

An example of elements known to the skilled person regarding the inter-symbol interference (ISI) extraction S430, in particular relative to the inter-symbol interference term $\dot{H}_{ISI}$ of the product $GH = \dot{H}_{OWN} + \dot{H}_{ISI}$ between the linear equalization and the estimation of the dispersion matrix, is now discussed.

The derived signal can be expressed as:

$$\hat{s}_{LIN_i} = S_i Gy = S_i GHs + S_i Gn = \dot{H}_i s + S_i Gn$$

Where $\dot{H}_i$ is the 2 x *N* equivalent channel matrix computed on the cascade of the true channel and the linear equalizer $S_i GH$. In particular, $\dot{H}_i$ defines the linear relationship between all transmitted symbols **s** and the decoded pair $\hat{s}_{LIN_i}$.

Thus, $\dot{H}_i$ can be thought as composed of:

- a 2x2 "own" term $\dot{H}_{OWN}$, relating the useful transmitted symbol pair $s_i$; and
- a 2x[2(N-1)] "ISI" term $\dot{H}_{ISI}$, introducing the inter-symbol interference term.

The amount of ISI strongly depends on the nature of the linear equalizer G.

At high SNRs and when opting for MMSE, the equalizer would tend to make the cascade of the equalizer and the channel orthogonal, i.e. *GH=I.* The signal would then be:

$$\hat{s}_{LIN_i} = S_i Gy = S_i GHs = S_i s = s_i$$

While at lower SNRs, a maybe non-negligible ISI interference term is still present.

As a consequence, the decoded pair can be further decomposed into:

$$\hat{s}_{LIN_i} = \dot{H}_{own} s_i + \dot{H}_{ISI} s + S_i Gn$$

Where $\dot{H}_{OWN}$ and $\dot{H}_{ISI}$ represent the 2x2 useful and 2x2N ISI components of the equivalent channel.

For convenience, matrix $\dot{H}_{ISI}$ is constructed such that it is zeroed out in the 2x2 sub-block corresponding to the *i*-th pair.

Adopting a (soft)-SIC approach, the method can, at least ideally (or practically in case of successful CRC decoding), remove all ISI terms.

Exploiting the soft-symbol turbo-decoding output, it is possible to convert S410 the soft-bits into soft-symbols and then multiply S430 them by $\dot{H}_{ISI}$ to obtain the ISI sequence. The latter can be used and subtracted S50 from the pair $\hat{s}_{LIN_i}$. At each SIC iteration, we would then have:

$$\mathbf{z}_i = \hat{\mathbf{s}}_{LIN_i} - \dot{\mathbf{H}}_{ISI}\hat{\mathbf{s}} = \dot{\mathbf{H}}_{own}\mathbf{s}_i + \dot{\mathbf{H}}_{ISI}(\mathbf{s} - \hat{\mathbf{s}}) + \mathbf{S}_i\mathbf{Gn}$$

Obviously, at convergence of $\hat{\mathbf{s}} \rightarrow \mathbf{s}$, the ISI term disappears:

$$\mathbf{z}_i = \hat{\mathbf{s}}_{LIN_i} - \dot{\mathbf{H}}_{ISI}\hat{\mathbf{s}} = \dot{\mathbf{H}}_{own}\mathbf{s}_i + \mathbf{S}_i\mathbf{Gn}$$

It should be noted that by using a SIC approach in this scheme, the method allows the linear equalizer *G* to be anything (provided it is still possible to correctly isolate the own and ISI components).

To enable (almost) correct first-pass decoding or any weak convergence capability for the receiver without any a-priori available, the linear equalizer may be chosen to be at least an eye-opener. A robust solution may be favored (e.g. Whitening Matched Filter discussed earlier).

The contents of interference cleaning process S30 are now discussed.

Interference cleaning process S30 comprises a spatial interference whitening S310, based on an estimation of the dispersion matrix *H*. In other words, the spatial interference whitening uses the value of estimation of the dispersion matrix *H*. The spatial interference whitening S310 is a data-processing that renders spatial interference white.

The left-over interference term after SIC operation, $\dot{\mathbf{H}}_{ISI}(\mathbf{s} - \hat{\mathbf{s}}) + \mathbf{S}_i\mathbf{Gn}$, is intrinsically colored mainly by the linear equalizer S20. Assuming it Gaussian, the Multi-Variate Gaussian probability function cost function maximization is achieved when the wanted signal is impaired by spatially white interference.

In the assumption that the soft-decoding process converges ($\hat{\mathbf{s}} \rightarrow \mathbf{s}$) and starts from a zero-sequence $\hat{\mathbf{s}} = \mathbf{0}$, the covariance matrix of the interference term can be approximated by (assuming uncorrelated ISI and noise terms):

$$\mathbf{R} = \mathbf{S}_i\mathbf{GQG}^H\mathbf{S}_i{}^H + (1 - \alpha)\dot{\mathbf{H}}_{ISI}\dot{\mathbf{H}}_{ISI}{}^H$$

Where $\alpha$ is a scalar ranging from 0 (i.e. no a-priori available/no SIC) to 1 (full a-priori/convergence of soft symbols to correct hard-decisions/number of receiver iteration). It is further noted that 1- $\alpha$ models any decreasing function of $\alpha$ while aiming at computationally cheapest load.

In the steady-state (assuming perfect SIC cancellation, i.e. $\hat{\mathbf{s}} = \mathbf{s}$ or $\alpha = 1$), we would have:

$$\mathbf{z}_i = \hat{\mathbf{s}}_{LIN_i} - \dot{\mathbf{H}}_{ISI}\hat{\mathbf{s}} = \dot{\mathbf{H}}_{own}\mathbf{s}_i + \dot{\mathbf{n}}_l$$

And the corresponding covariance matrix would reduce to:

$$\mathbf{R} = \mathbf{S}_i\mathbf{GQG}^H\mathbf{S}_i{}^H$$

Finally, by taking the 2x2 Cholesky factor of the covariance matrix **R**:

$$\mathbf{C}^H\mathbf{C} = \mathbf{R}$$

Then $\mathbf{I} = \mathbf{C}^{-H}\mathbf{RC}^{-1}$ which means that by combining signal pairs through the matrix $\mathbf{W} = \mathbf{C}^{-H}$, the method may spatially whiten the interference term on *i*-th pair, that is:

$$\mathbf{r}_i = \mathbf{W}\mathbf{z}_i = \mathbf{W}\dot{\mathbf{H}}_{\text{own}}\mathbf{s}_i + \mathbf{W}\left(\dot{\mathbf{H}}_{\text{ISI}}(\mathbf{s} - \hat{\mathbf{s}}) + \mathbf{S}_i\mathbf{Gn}\right) = \mathbf{W}\dot{\mathbf{H}}_{\text{own}}\mathbf{s}_i + \dot{\mathbf{n}}_1$$

With $\mathrm{W}\dot{H}_i$ and $\dot{n}1$ being the equivalent channel and (white) interference term for the $i$-th pair. Spatial Interference Whitening S310 may thus comprise determining such matrix W, e.g. at each iteration, and apply it on the input (i.e. the initial signal at first or the result of the subtraction S50 after).

Different examples of the proposed scheme for the Spatial Interference Whitening S310 can then be identified, in particular relating to the problem of estimating $R$ from which the whitening coefficients are computed upon:

- One solution can consist in estimating the remaining interference covariance based on some further processing, such as on $\hat{\mathbf{s}}_{\text{LIN}_i}$ - $\dot{H}_{\text{own}}\hat{\mathbf{s}}_i$ (e.g. using soft-symbols from turbo-decoding).
- Another solution is, adopting the proposed parametric expression described above, to estimate the parameter $\alpha$ by evaluating (at each SIC iteration) the variance of soft-symbols $\hat{\mathbf{s}}$: $\alpha = \dfrac{\|\hat{s}\|^2}{N} = \dfrac{\hat{s}^{\mathrm{H}}\hat{s}}{N}.$

As can be seen from these two first examples, the spatial interference whitening S310 may thus be performed based on the result $\hat{s}$ of the bits-to-symbols conversion S410. In other words, estimated bit-level signal $\hat{u}$ is used (in its symbol version $\hat{s}$) to adapt spatial interference whitening S310 of the next iteration.

Other solutions may be retained, for example:

- Optionally, the parameter $\alpha$ can be estimated on bit-wise extrinsic-information (available from Turbo-decoder) variance, rather than on reconstructed soft-symbols.
- To further reduce complexity, the iteration-dependent computation of matrix **R** can be avoided using the "optimistic" belief that $\alpha = 1$ (i.e. fast convergence of $\hat{\mathbf{s}} \rightarrow \mathbf{s}$). In this case, the whitening matrix is computed once on the noise covariance and equalizer weights knowledge: $\mathbf{R} = \mathbf{S}_i\mathbf{GQG}^{\mathrm{H}}\mathbf{S}_i^{\mathrm{H}}$.

Interference cleaning process S30 then comprises a MIMO joint detection S320 based on (i.e. using) the spatial interference whitening S310 and on the estimation of the dispersion matrix $H$. A MIMO joint detection is also sometimes called "sphere decoding". Interference cleaning process S30 then comprises a turbo-decoding S330, which outputs a soft result in the case of the example. This way, interference cleaning process S30 takes advantage of the MIMO structure of the signal and of its artificially introduced redundancy to clean it from temporal interference. Spatial interference whitening S310 allows MIMO Joint Detection S320 to work better. Thus, the method efficiently combines the SIC approach with cleaning techniques specific to MIMO to arrive at an even better result.

The signal processed by the previous stages may indeed now be decoded in a soft-output joint-detection S320 fashion. That is, the method of the example decodes signal $\mathbf{r}_i$ in order to retrieve that bi-dimensional complex QAM symbol $\mathbf{s}_i$ pair by exploiting the ability to fully enumerate the possibilities of the MIMO finite alphabet. In particular, the method decodes them, being able to provide bit-wise soft-output in the form of bit-wise Log-Likelihood-Ratios to cope with the soft-Turbo-Decoding S330 coming further.

The scheme, as a further embodiment, allows the use of any a-priori aided near-Maximum Likelihood scheme, such as implementation of an optimization problem of the following type:

$$\min |r - \mathbf{W}\dot{\mathbf{H}}_{\text{own}}s|^2$$

The method of the example further comprises refining S420 the estimation of the dispersion matrix $H$ after the bits-to-symbols conversion S410. This refinement S420 is based on the result $\hat{s}$ of the bits-to-symbols conversion S410, and is performed in any way easily implementable by the skilled person. Also, it is performed before the ISI extracting S430 in the example, as the new matrix $H$ is used to determined $\dot{H}_{\text{ISI}}$. This is the reason why the refining S420 is indicated as step S420 between S410 and S430 on the flowchart of FIG. 2, although it is performed in parallel. The result of the refinement S420 (the new estimation of $H$) may also be fed to the blocks of the receiver requiring such estimation, such as the whitening S310 and/or the Joint Detection S320. Thus, the refinement allows an "auto-learning" of the method and an adaptation to the results observed, leading *in fine* to a finer estimation of $u$.

It should be noted that any $\alpha$ *priori* knowledge of previously decoded sequences can be used (decoded HSDPA/WCDMA/any supported standard interfering streams, HARQ retransmissions, pilot and synchronization signals) for estimating *H*. The reconstructed soft QAM symbols can be further used (this is the object of the refinement S420), adopting any convenient scheme such as Zero Forcing (ZF) or MMSE estimators, to refine the channel estimate. As per construction, the receiver is not sensitive to the linear equalizer step S20 (provided it is an eye-opener), the refined channel estimates may then be fed to the joint-detector and soft-SIC stages (for finer ISI-reconstruction) only.

The proposed method is derived to exploit optimality of the MIMO QAM 2x2 Joint Detection. The method also exploits the availability of soft a-priori information adopting a SIC scheme and the availability of soft a-priori information for Joint-detection. Also, the method improves performances by applying a spatial whitening operation based on interference statistics. The method allows using a direct estimation of the interference covariance matrix (i.e. accounting for noise + ISI). Channel estimation accuracy is improved along decoding iterations. The method also allows the use of an iteration dependent parametric approximation of the same covariance matrix based on simple statistics of soft-decoded symbols. Also, the method allows the use of a further simplified constant iteration-independent interference covariance matrix.

The receiver of the method splits the HSDPA MIMO symbol detection problem into a first, linear, equalization stage of the temporal channel (embedding the needed operations of descrambling and despreading the chip-sequence into, eventually per-code, symbol streams) and a reduced-dimension non-linear multidimensional\MIMO QAM-symbol detection stage.

**Claims**

1. A method implemented by a receiver of a telecommunication device comprising:

    - receiving (S10) a signal ($y$) corresponding to an intended signal ($u$) sent turbo-encoded and bits-to-symbols converted ($s$) on a MIMO time-dispersive channel having a dispersion matrix ($H$),
    - deriving (S20) an initial signal ($\hat{s}_{LIN}$) from the received signal ($y$),
    - applying an interference-cleaning process (S30) on the initial signal ($\hat{s}_{LIN}$), the interference cleaning process comprising a spatial interference whitening (S310) based on an estimation of the dispersion matrix ($H$), a MIMO joint detection (S320) based on the spatial interference whitening (S310) and on the estimation of the dispersion matrix ($H$), and then a turbo-decoding (S330),
    - subtracting (S50) from the initial signal ($\hat{s}_{LIN}$) a subtraction signal ($\dot{H}_{ISI}\hat{s}$) determined by performing an interference-extracting process (S40) on the result of the application of the interference-cleaning process (S30), the interference- extracting process comprising a bits-to-symbols conversion (S410) and then an inter-symbol interference extracting (S430) based on the estimation of the dispersion matrix ($H$),
    - determining an estimated signal ($\hat{u}$) indicative of the intended signal ($u$) by performing the interference-cleaning process (S30) on the result of the subtracting (S50).

2. The method of claim 1, wherein the application of the interference-cleaning process (S30), the subtracting (S50) and the determining of the estimated signal ($\hat{u}$) are iterated until convergence, the application of the interference-cleaning process (S30) being at each iteration performed on the result of the subtraction (S50) of the previous iteration.

3. The method of claim 1 or 2, wherein the deriving (S20) comprises performing a linear equalization ($G$) on the received signal ($y$), according to the estimation of the dispersion matrix ($H$).

4. The method of claim 3, wherein the inter-symbol interference extracting (S430) consists of applying the inter-symbol interference term ($\dot{H}_{ISI}$) of the product ($GH = \dot{H}_{OWN} + \dot{H}_{ISI}$)) between the linear equalization and the estimation of the dispersion matrix.

5. The method of any of claims 1-4, wherein the spatial interference whitening (S310) is performed based on the result ($\hat{s}$) of the bits-to-symbols conversion (S410).

6. The method of any of claims 1-5, further comprising refining (S420) the estimation of the dispersion matrix ($H$) after the bits-to-symbols conversion (S410), based on the result ($\hat{s}$) of the bits-to-symbols conversion (S410).

7. The method of any of claims 1-6, wherein the turbo-decoding (S330) outputs a soft result, the method further comprising a hard-decision (S60) based on the estimated signal ($\hat{u}$).

8. The method of any of claims 1-7, wherein the intended signal ($u$) is an HSPA 2x2 MIMO signal.

9. A circuit adapted to configure a receiver of a telecommunication device to perform the method of any of claims 1-8.

10. A receiver of a telecommunication device configured to perform the method of any of claims 1-8.

11. A mobile communication device comprising the receiver of claim 10.

12. A program comprising instructions for configuring a receiver of a telecommunication device to perform the method of any of claims 1-8.

13. A data storage medium having recorded thereon the program of claim 12.

FIG. 1

FIG. 3

FIG. 2

Europäisches
Patentamt

European
Patent Office

Office européen
des brevets

# EUROPEAN SEARCH REPORT

Application Number

EP 13 30 5293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HYUKJOON KWON ET AL: "Successive Interference Cancellation via Rank-Reduced Maximum A Posteriori Detection", IEEE TRANSACTIONS ON COMMUNICATIONS, vol. 61, no. 2, 1 February 2013 (2013-02-01), pages 628-637, XP011495270, NJ, USA ISSN: 0090-6778, DOI: 10.1109/TCOMM.2012.122112.120165 * abstract * * Sections I-VII * | 1-13 | INV. H04L25/02 H04L25/03 |
| A | JUNGWON LEE ET AL: "Interference mitigation in MIMO interference channel via successive single-user soft decoding", IEEE INFORMATION THEORY AND APPLICATIONS WORKSHOP, 5 February 2012 (2012-02-05), pages 180-185, XP032162888, ITA DOI: 10.1109/ITA.2012.6181804 ISBN: 978-1-4673-1473-2 * Sections I-VI * | 1-13 | |
| A | HYOUGYOUL YU ET AL: "Iterative interstream interference cancellation for MIMO HSPA+ system", JOURNAL OF COMMUNICATIONS AND NETWORKS, KOREAN INSTITUTE OF COMMUNICATION SCIENCES, SEOUL, KR, vol. 14, no. 3, 1 June 2012 (2012-06-01), pages 273-279, XP011473034, ISSN: 1229-2370, DOI: 10.1109/JCN.2012.6253088 * abstract * * Sections I-V * | 1-13 | TECHNICAL FIELDS SEARCHED (IPC) H04L |

The present search report has been drawn up for all claims

| Place of search | Date of completion of the search | Examiner |
|---|---|---|
| The Hague | 7 August 2013 | Dhibi, Youssef |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Mobile Broadband: The Global Evolution of UMTS/HSPA. *3GPP Release 7 and Beyond,* May 2004
- WCDMA Evolved. *The first step - HSDPA,* May 2004
- **J. KORHONEN.** *HSDPA An Introduction*
- **S. KIM ; H. KIM ; K.B. LEE.** HSDPA in Gaussian MIMO Broadcast Channels. *CIC,* 2004
- **T. BAUMGARTNER ; E. BONEK.** On the Optimum Number of Beams for Fixed Beam Smart Antennas in UMTS FDD. *IEEE-WC,* January 2006
- **MEHLFUHRER, C.F. MECKLENBRAUKER ; M. RUPP.** On Reduced-Complexity Variants to the Double Space-Time Transmit Diversity Proposal for UMTS. *IEEE ISCCSP,* March 2006
- **SAMARDZIJA, A. LOZANO ; C.B. PAPADIAS.** Design and Experimental Validation of MIMO Multiuser Detection for Downlink Packet Data. *EURASIP JASP,* November 2005
- **K.-D. KAMMEYER.** *Transmit Diversity and MIMO Systems for the UMTS Downlink (FDD*
- *HSDPA in W-CDMA*
- **J.G. ANDREWS ; W. CHOI ; R.W. HEATH JR.** MIMO in 3G Cellular Systems: Challenges and Future Directions. *IEEE COM Mag,* 2005
- Adaptive Space-Time Transmit Diversity for MIMO Systems. **J.H. HORNG ; L. LI ; J. ZHANG.** 57th IEEE Vehicular Technology Conf. VTC-Spring, 2003
- **M.J. HEIKKILA ; K. MAJONEN.** Comparison of Layered and Diversity Approaches for Increasing WCDMA Data Rates in Frequency-Selective MIMO Channels. *IEEE 7th Int'1 Symp. on Spread Spectrum Techniques and Applications (ISSTA,* 02 September 2002
- **J. ZHANG ; B. RAGHOTHAMAN ; Y. WANG ; G. MANDYAM.** Receivers and CQI Measures for MIMO-CDMA Systems in Frequency-Selective Channels. *Eurasip JASP,* November 2006, 1668-1679